# EUROPÄISCHE PATENTANMELDUNG

(11) **EP 4 276 450 A1**
(43) Veröffentlichungstag der Anmeldung: **15.11.2023**
(21) Anmeldenummer: 23165978.0
(22) Anmeldetag: 31.03.2023
(51) Int. Cl.: G01N 21/90

(54) **VORRICHTUNG UND VERFAHREN ZUM INSPIZIEREN VON BEHÄLTNISSEN MIT POSITIONSERFASSUNG**

(30) Priorität: 11.05.2022 DE 102022111734
(71) Anmelder: Krones AG, 93073 Neutraubling (DE)
(72) Erfinder: Bock, Thomas, 93073 Neutraubling (DE); Weigl, Franz, 93073 Neutraubling (DE)
(74) Vertreter: Hannke Bittner & Partner mbB Regensburg

(57) **Zusammenfassung**

Vorrichtung (1) zum Inspizieren von Behältnissen (10) mit einer Transporteinrichtung (2), welche die Behältnisse (10) in einer vorgegebenen Transportrichtung transportiert, mit wenigstens einer Führungseinrichtung (12), welche die Behältnisse (10) während ihres Transports in der Transportrichtung führt, wobei bevorzugt eine Position dieser Führungseinrichtung (12) in einer zu der Transportrichtung senkrecht stehenden Richtung (Q) verstellbar ist und mit wenigstens einer Bildaufnahmeeinrichtung (4a, 4b, 4c, 4d), welche dazu geeignet und bestimmt ist, ein ortsaufgelöstes Bild der von der Transporteinrichtung (2) transportierten Behältnisse (10) aufzunehmen, und mit einer Positionserfassungseinrichtung (14), welche eine Position der Behältnisse in der Transportrichtung und/oder der Querrichtung erfasst dadurch gekennzeichnet, dass die Positionserfassungseinrichtung (4a, 4b, 4c, 4d, 14) zur Positionserfassung wenigstens ein von der Bildaufnahmeeinrichtung (4a, 4b, 4c, 4d) aufgenommenes Bild aus-wertet und/oder die wenigstens eine Bildaufnahmeeinrichtung (4a, 4b, 4c, 4d) zumindest einen Bestandteil dieser Positionserfassungseinrichtung ausbildet.

## Beschreibung

Die vorliegende Erfindung bezieht sich auf eine Vorrichtung und ein Verfahren zum Inspizieren von Behältnissen. Aus dem Stand der Technik sind sehr viele Verfahren und Vorrichtungen zum Inspizieren von Behältnissen bekannt. Dabei ist es bekannt, die Behältnisse selbst zu inspizieren, aber auch Bestandteile der Behältnisse, wie etwa deren Böden oder deren Verschlüsse. Die vorliegende Erfindung befasst sich insbesondere mit der Inspektion der Verschlüsse bzw. der Behältnisse mit den daran angeordneten Verschlüssen.

Aus dem Stand der Technik ist es bekannt, dass, um einen Behältnisverschluss genau inspizieren zu können, eine 360° Aufnahme insbesondere durch mehrere, beispielsweise vier, Kameras erstellt wird. Dabei ist es möglich, dass die Position eines Musters wie etwa eines optimalen Verschlusses auf eine reale Behältnisposition gelegt wird. Im Stand der Technik werden dabei üblicherweise die Behältnisse mittels Führungseinrichtungen an vorbestimmte Positionen gefahren und an diesen inspiziert. Zum Führen der Behältnisse sind dabei üblicherweise Führungseinrichtungen, wie beispielsweise Führungsgeländer vorgesehen. Im Stand der Technik ist es bekannt, eine Sensoreinrichtung vorzusehen, die die Position dieses Führungsgeländers prüft. Dies geht jedoch mit zusätzlichen Kosten einher und auch mit einem zusätzlichen Auswertungsaufwand.

Aus der DE 10 2008 046 172 A1 ist eine Vorrichtung zur Überwachung des Behältertransports bei einer Fördervorrichtung für Behälter und/oder Gebinde bekannt.

Der vorliegenden Erfindung liegt daher die Aufgabe zugrunde, eine Vorrichtung und ein Verfahren zum Inspizieren von Behältnissen und insbesondere von Behältnisverschlüssen zur Verfügung zu stellen, welche eine gegenüber dem Stand der Technik einfachere Positionserfassung der jeweiligen Behältnisse und/oder deren Verschlüsse ermöglichen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Inspizieren von Behältnissen in der Getränkeindustrie (und insbesondere von befüllten Behältnissen) weist eine Transporteinrichtung in einer Behälterbehandlungsanlage auf, welche die Behältnisse entlang eines vorgegebenen Transportpfads und/oder einer vorgegebenen Transportrichtung transportiert sowie wenigstens eine Führungseinrichtung, welche die Behältnisse während ihres Transports in der Transportrichtung führt, wobei bevorzugt eine Position dieser Führungseinrichtung in einer zu der Transportrichtung senkrecht stehenden Richtung verstellbar ist.

Weiterhin weist die Vorrichtung wenigstens eine Bildaufnahmeeinrichtung auf, welche dazu geeignet und bestimmt ist, ein ortsaufgelöstes Bild der von der Transporteinrichtung transportierten Behältnisse und insbesondere deren Behältnisverschlüsse aufzunehmen. Weiterhin weist die Vorrichtung eine Positionserfassungseinrichtung auf, welche eine Position der Behältnisse in der Transportrichtung und/oder der Querrichtung erfasst.

Erfindungsgemäß wertet die Positionserfassungseinrichtung zur Positionserfassung wenigstens ein von der Bildaufnahmeeinrichtung aufgenommenes Bild aus und/oder die wenigstens eine Bildaufnahmeeinrichtung bildet zumindest einen Bestandteil der Positionserfassungseinrichtung aus.

Es wird daher im Rahmen der Erfindung vorgeschlagen, dass zur Positionserfassung der Behältnisse kein weiterer Sensor eingesetzt wird, sondern die Bildaufnahmeeinrichtungen, welche insbesondere auch zur Inspektion dienen, auch zur Positionserfassung verwendet werden. Bevorzugt handelt es sich bei den Behältnissen um Flaschen, insbesondere um Glasflaschen oder Kunststoffflaschen.

Bevorzugt wird jedoch die Position der Kameras bzw. Bildaufnahmeeinrichtung nicht durch das aufgenommene Bild bzw. die aufgenommenen Bilder beschrieben.

Bevorzugt werden daher die von der Bildaufnahmeeinrichtung aufgenommenen Bilder sowohl verwendet, um auf ein Qualitätsmerkmal des Behältnisses und/oder des Behältnisverschlusses zu schließen als auch um eine Position des Behältnisses zu erfassen.

Bevorzugt inspiziert die Vorrichtung Mündungsbereiche der Behältnisse und/oder die Verschlüsse.

Bevorzugt handelt es sich bei der Transporteinrichtung um ein Transportband oder eine Transportkette und insbesondere ein umlaufendes Transportband oder eine Transportkette, insbesondere ein Transportband oder eine Transportkette, auf der die Behältnisse bevorzugt stehend und bevorzugt auch mit einem Abstand zueinander transportiert werden. Besonders bevorzugt transportiert die Transporteinrichtung die Behältnisse in einer geradlinigen Transportrichtung. Bevorzugt werden die Behältnisse einbahnig transportiert.

Bei einer bevorzugten Ausführungsform weist die Vorrichtung eine Antriebseinrichtung auf, um eine Position der Führungseinrichtung zu verstellen und bevorzugt auch eine Steuerungseinrichtung zum Steuern dieser Antriebseinrichtung. Dabei erfolgt eine Verstellung der Führungseinrichtung insbesondere in einer zu der Transportrichtung senkrecht stehenden Richtung. Bevorzugt ist die Antriebseinrichtung aus einer Gruppe von Antrieben gewählt, welche elektrische Antriebe, magnetische Antriebe, hydraulische Antriebe, pneumatische Antriebe und dergleichen enthält. Es wäre jedoch auch die Verwendung einer manuellen Verstelleinrichtung denkbar.

Bevorzugt steuert die Steuerungseinrichtung die Antriebseinrichtung auf Basis wenigstens eines von der Bildaufnahmeeinrichtung aufgenommenen Bildes und bevorzugt auf Basis einer Vielzahl von den von der Bildaufnahmeeinrichtung aufgenommenen Bildern. Dabei ist es möglich, dass die Position der Führungseinrichtung ein einem laufenden Arbeitsbetrieb der Vorrichtung veränderbar ist.

Bevorzugt erstreckt sich die Führungseinrichtung wenigstens abschnittsweise entlang der Transportrichtung und bevorzugt weist die Führungseinrichtung ein Führungsgeländer auf. Besonders bevorzugt weist die Führungseinrichtung zwei Geländer auf, zwischen denen die Behältnisse transportiert werden. Bevorzugt handelt es sich bei den Behältnissen um befüllte und/oder verschlossene Behältnisse. Dabei kann es sich sowohl um Kunststoffbehältnisse als auch um Glasbehältnisse handeln. Besonders bevorzugt handelt es sich um Behältnisse, welche mit einem Etikett und/oder einem Aufdruck versehen sind.

Bevorzugt erstreckt sich die Führungseinrichtung entlang der Transportrichtung und/oder entlang des Transportpfads der Behältnisse wenigstens 10 cm, bevorzugt weniger als 20 cm bevorzugt 30 cm und bevorzugt wenigstens 40 cm.

Bevorzugt weist die Inspektionseinrichtung eine in der vertikalen Achse zentrisch über dem Verschluss angebrachte Bildaufnahmeeinrichtung auf. Bevorzugt wird der Behältnisverschluss mittels ringförmiger Beleuchtungseinrichtung beleuchtet.

Besonders bevorzugt weist die Inspektionseinrichtung wenigstens zwei, bevorzugt wenigstens drei und bevorzugt wenigstens vier Bildaufnahmeeinrichtungen auf, welche bevorzugt jeweils wenigstens ein ortsaufgelöstes Bild der Behältnisse aufnehmen.

Insbesondere durch das Vorsehen mehrerer Kameras ist eine 360° Aufnahme des Behältnisverschlusses möglich. Um den Behältnisverschluss genau inspizieren zu können, wird damit bevorzugt eine 360° Aufnahme durch die wenigstens zwei, bevorzugt wenigstens drei und bevorzugt vier Bildaufnahmeeinrichtungen bzw. Kameras erstellt. Besonders bevorzugt nehmen die Bildaufnahmeeinrichtungen den Behältnisverschluss aus unterschiedlichen Richtungen auf. Bevorzugt ist wenigstens eine Bildaufnahmeeinrichtung und sind bevorzugt mehrere und besonders bevorzugt alle Bildaufnahmeeinrichtungen oberhalb des Behältnisverschlusses angeordnet und/oder nehmen diesen von oben her und insbesondere von schräg oben auf. Bei einer weiteren bevorzugten Ausführungsform ist wenigstens eine Bildaufnahmeeinrichtung und sind bevorzugt mehrere Bildaufnahmeeinrichtungen auf der Höhe des Behältnisverschlusses oder unterhalb des Behältnisverschlusses angeordnet Auf diese Weise kann der Behältnisverschluss im Wesentlichen vollständig aufgenommen werden, d.h. heißt nicht nur seine Oberseite, sondern auch sein Randbereich, der über beispielsweise ein Gewinde eines Behältnisses ragt. Besonders bevorzugt weisen die mehreren Bildaufnahmeeinrichtungen im Wesentlichen den gleichen Abstand von einer Soll-Position des Behältnisses bzw. des Behältnisverschlusses auf.

Besonders bevorzugt beobachtet die wenigstens eine Bildaufnahmeeinrichtung und beobachten bevorzugt mehrere Bildaufnahmeeinrichtungen das Behältnis aus einer Richtung, die schräg zu der Längsrichtung des Behältnisses verläuft. Auch wäre es möglich, dass wenigstens eine Bildaufnahmeeinrichtung und bevorzugt mehrere Bildaufnahmeeinrichtungen das Behältnis senkrecht zu seiner Längsrichtung beobachten.

Bei einer besonders bevorzugten Ausführungsform weist die Vorrichtung eine Beleuchtungseinrichtung zum Beleuchten der Behältnisse und/oder Behältnisverschlüsse auf. Besonders bevorzugt ist diese Beleuchtungseinrichtung derart angeordnet, dass sie den Behältnisverschluss (zumindest auch) in einer Längsrichtung des Behältnisses (und insbesondere von oben her) beleuchtet. Es wäre jedoch auch möglich, dass mehrere Beleuchtungseinrichtungen vorgesehen sind. Vorteilhaft ist jedoch die Beleuchtungseinrichtung derart ausgebildet, dass das von ihr ausgegebene Licht nicht unmittelbar auf eine oder mehrere der Bildaufnahmeeinrichtungen trifft.

Besonders bevorzugt ist eine Beleuchtungseinrichtung und besonders bevorzugt sind mehrere Beleuchtungseinrichtungen mit den Bildaufnahmeeinrichtungen synchronisiert. Dies bedeutet, dass besonders bevorzugt die Beleuchtungseinrichtung eine Lampensteuerung und insbesondere Blitzlampensteuerung aufweist, die besonders bevorzugt mit wenigstens einer und bevorzugt mit mehreren Bildaufnahmeeinrichtungen synchronisiert ist.

Bevorzugt sind die Bildaufnahmeeinrichtungen und/oder die Beleuchtungseinrichtung auf eine Bewegung der Behältnisse getriggert.

Besonders bevorzugt steuert die Steuerungseinrichtung die Antriebseinrichtung auf Basis wenigstens der von zwei, bevorzugt auf Basis der von wenigstens drei und bevorzugt auf Basis der von vier Bildaufnahmeeinrichtungen aufgenommenen Bilder. Dabei ist es möglich, dass ein Muster d. h. beispielsweise optimaler Verschluss auf eine reale Behältnisposition gelegt wird. Auf diese Weise wird eine reale Behältnisposition ermittelt. Je nach einer Position des Behältnisverschlusses kann das Bild, das von einer Bildaufnahmeeinrichtung aufgenommen wird größer oder kleiner erscheinen als das Bild, das einer anderen Bildaufnahmeeinrichtung aufgenommen wurde, wenn der Verschluss näher an der erstgenannten Bildaufnahmeeinrichtung (oder weiter von dieser entfernt) liegt.

Durch ein Auswerten der Behältnispositionen insbesondere über eine Vielzahl von Behältnissen hinweg ergibt sich eine Verteilungsfunktion. Wenn diese Verteilungsfunktion nicht mittig zur Idealposition liegt, kann eine Meldung ausgegeben werden, dass die Führungseinrichtung bzw. das Geländer um einen vorgemessenen Abstand nach außen oder innen verstellt werden sollte, um die Kontrollgenauigkeit zu verbessern. Umso mittiger, bzw. zentraler das Behältnis positioniert ist, umso besser werden auch Fehler erkannt. So ist es möglich, dass auch im laufenden Betrieb eine Verstellung der Führungseinrichtung vorgenommen wird. Falls sich beispielsweise zeigt, dass einzelne oder auch statistisch gesehen Behältnisse in einer quer zur Transportrichtung verlaufenden Richtung verschoben sind, kann durch eine entsprechende Einstellung der Führungsgeländer diese Position verbessert werden.

Ein derartiger Versatz kann wie oben angemerkt auch in der Transportrichtung ermittelt werden, beispielsweise um die Zeit zwischen einem Auslösen einer Lichtschranke und einer Bildaufnahme zu optimieren. Dies beruht auf der Annahme, dass eine ausreichend genaue Lichtschranke verwendet wird. Zu einer Veränderung dieser Zeit und/oder des Weges kann es beispielsweise infolge einer verschleißbedingten Längung einer Transportkette oder einer Verschmutzung der Führungsgeländer beispielsweise durch Etikettenverschleppung kommen. Dabei ist es auch möglich, dass aus den Bildaufnahmen ein charakteristischer Wert ermittelt wird, der für einen Verschleiß einer Transporteinrichtung, beispielsweise einer Kettenlängung charakteristisch ist. Dieser Wert kann wiederum auch an andere Einheiten übermittelt werden.

Besonders bevorzugt wird auch auf Basis des von wenigstens einer Bildaufnahmeeinrichtung aufgenommenen Bildes auf einen Verschleißzustand einer Transporteinrichtungen, insbesondere aber nicht ausschließlich eine Transportkette oder eines Transportbandes geschlossen. So kann beispielsweise an einen Benutzer ein Wert ausgegeben werden, der veranschaulicht, dass ein Transportmittel wie etwa eine Transportkette in Kürze zu wechseln ist.

Bei einer weiteren vorteilhaften Ausführungsform weist die Vorrichtung eine Auswerteeinrichtung auf, welche die Bilder von wenigstens zwei, bevorzugt wenigstens drei und bevorzugt von vier Bildaufnahmeeinrichtungen verwendet und insbesondere auswertet, um eine Position der Behältnisse festzustellen. So kann beispielsweise diese Auswerteeinrichtung ermitteln, welchen Abstand die Behältnisse zu den einzelnen Bildaufnahmeeinrichtungen zum Zeitpunkt der Bildaufnahme aufweisen.

Besonders bevorzugt werden diese Auswertungen für eine Vielzahl von Behältnissen durchgeführt. Sollte sich beispielsweise ergeben, dass statistisch die Behältnisse etwas weiter links von einer Soll-Position liegen, könnte die Führungseinrichtung derart angesteuert werden, dass dieser statistisch auftretende Versatz ausgeglichen wird und die Behältnisse wieder an ihrer Soll-Position oder anhand ihres Soll-Pfads transportiert werden. Besonders bevorzugt erfolgt die Auswertung über eine Größe der Behältnisse und/oder Behältnisverschlüsse in dem jeweiligen Bild der Kamera bzw. Bildaufnahmeeinrichtung. Wenn beispielsweise das aufgenommene Behältnis in einem Kamerabild größer erscheint als in dem Kamerabild der gegenüberliegenden Kamera, so lässt sich daraus schließen, dass das Behältnis bei der Bildaufnahme sich näher an der erstgenannten Bildaufnahmeeinrichtung als an der zweiten Bildaufnahmeeinrichtung befand.

Bei einer weiteren vorteilhaften Ausführungsform weist die Vorrichtung eine weitere Positionserfassungseinrichtung auf, welche eine Position der Behältnisse in der Transportrichtung erfasst, wobei diese weitere Positionserfassungseinrichtung bevorzugt in der Transportrichtung der Behältnisse vor oder bei der Bildaufnahmeeinrichtung angeordnet ist. Besonders bevorzugt weist diese weitere Positionserfassungseinrichtung wenigstens eine Lichtschranke auf. So ist es möglich, dass mittels dieser Lichtschranke die Bildaufnahme ausgelöst wird. Dabei ist es auch möglich, dass sich diese Lichtschranke genau an der Soll-Position der Behältnisse befindet.

Diese weitere Positionserfassungseinrichtung erlaubt bevorzugt eine grobe Positionserfassung und kann wie oben erwähnt, die Bildaufnahmeeinrichtungen bzw. eine Bildaufnahme auslösen.

Bei einer weiteren vorteilhaften Ausführungsform weist die Vorrichtung eine Ausschleuseeinrichtung auf, welche dazu geeignet und bestimmt ist, Behältnisse auf Basis eines Inspektionsergebnisses auszuschleusen. Bevorzugt ist diese Ausschleuseeinrichtung in der Transportrichtung nach der oder den Bildaufnahmeeinrichtungen angeordnet.

Bevorzugt ermittelt die Inspektionseinrichtung wenigstens einen Wert, der für eine Qualität der Behältnisse und/oder der Behältnisverschlüsse charakteristisch ist. Wenn dieser Wert nicht einem vorgegebenen Kriterium entspricht, kann bevorzugt die Ausschleuseeinrichtung aktiviert werden und das betreffende Behältnis aus dem Produktionspfad ausschleusen. Bei einer bevorzugten Ausführungsform ermittelt die Inspektionseinrichtung diesen Wert auf Basis wenigstens eines von der Bildaufnahmeeinrichtung aufgenommenen Bildes und bevorzugt auf Basis mehrerer (von den mehreren Bildaufnahmeeinrichtungen aufgenommenen Bildern).

Bevorzugt ist eine Vergleichseinrichtung vorgesehen, welche von der oder den Bildaufnahmeeinrichtungen aufgenommene Bilder mit Vergleichsbildern vergleicht und/oder gemessene Werte mit Vergleichswerten vergleicht.

Die vorliegende Erfindung ist weiterhin auf ein Verfahren zum Inspizieren von Behältnissen gerichtet, wobei eine Transporteinrichtung die Behältnisse in einer vorgegebenen Transportrichtung transportiert und wenigstens eine Führungseinrichtung die Behältnisse während ihres Transports in der Transporteinrichtung führt und insbesondere seitlich führt. Dabei ist bevorzugt eine Position dieser Führungseinrichtung in einer zur der Transportrichtung senkrecht stehenden Richtung verstellbar und es ist weiterhin wenigstens eine Bildaufnahmeeinrichtung vorgesehen, welche wenigstens ein ortsaufgelöstes Bild der von der Transporteinrichtung transportierten Behältnisse aufnimmt. Weiterhin erfasst eine Positionserfassungseinrichtung eine Position der Behältnisse in der Transportrichtung und/oder der Querrichtung.

Erfindungsgemäß wertet die Positionserfassungseinrichtung zur Positionserfassung wenigstens ein von der Bildaufnahmeeinrichtung aufgenommenes Bild aus und/oder die wenigstens eine Bildaufnahmeeinrichtung bildet zumindest einen Bestandteil dieser Positionserfassungseinrichtung aus.

Es wird daher auch verfahrensseitig vorgeschlagen, dass die ohnehin für die Inspektion benötigten Bildaufnahmeeinrichtungen auch dazu verwendet werden, um die Position der Behältnisse zu erfassen.

Besonders bevorzugt wird die Position der Führungseinrichtung unter Berücksichtigung des von der Bildaufnahmeeinrichtung aufgenommenen Bildes verändert.

Bevorzugt nehmen wenigstens zwei, bevorzugt wenigstens drei und bevorzugt wenigstens vier Bildaufnahmeeinrichtungen Bilder der Behältnisse auf. Bevorzugt nehmen diese Bildaufnahmeeinrichtungen Bilder der Behältnisse aus unterschiedlichen Richtungen auf.

Bei einem bevorzugten Verfahren werden die von wenigstens zwei, bevorzugt von wenigstens drei und bevorzugt von wenigstens vier Bildaufnahmeeinrichtungen aufgenommenen Bilder ausgewertet, um die Position der Behältnisse in der Querrichtung und/oder der Transportrichtung zu bestimmen.

Bevorzugt wird ausgewertet in welcher Größe das Behältnis oder der Behältnisverschluss in wenigstens einem der aufgenommenen Bilder und bevorzugt in einer Vielzahl der aufgenommenen Bilder erscheint und hieraus die Position des Behältnisses ermittelt. Bevorzugt wird die Größe in welcher das Behältnis in dem von einer ersten Bildaufnahmeeinrichtung aufgenommenen Bild erscheint verglichen mit der oder den Größen, in denen das Bild in den von wenigstens einer weiteren Bildaufnahmeeinrichtung aufgenommenen Bild erscheint. Auf Basis dieses Vergleichs wird bevorzugt auf die Position des Behältnisses in der Transportrichtung und/oder der Querrichtung geschlossen.

Bei einem bevorzugten Verfahren wird eine Vielzahl von Bildern von Behältnissen aufgenommen und mittels dieser Bilder eine Verteilung erzeugt, welche eine Verteilung der Behältnisse insbesondere in der Querrichtung darstellt. Anhand dieser Verteilung können die Führungseinrichtungen verstellt werden.

Bevorzugt wird daher eine Vielzahl der von unterschiedlichen Behältnissen aufgenommenen Bildern ausgewertet, um die Position der Behältnisse (insbesondere statistisch) zu bestimmen. Insbesondere kann auf diese Weise eine Position der Behältnisse in der Querrichtung (und bevorzugt auch in der Transportrichtung) bestimmt werden. Besonders bevorzugt wird eine Vielzahl von aufgenommenen Bildern abgespeichert und bevorzugt auch ausgewertet.

Bei einem weiteren bevorzugten Verfahren wird zur Positionsbestimmung der Behältnisse das Bild wenigstens einer ersten Bildaufnahmeeinrichtung mit dem Bild einer zweiten Bildaufnahmeeinrichtung des gleichen Behältnisses verglichen.

Bei einem weiteren bevorzugten Verfahren wird mittels einer weiteren Positionserfassung die Position der Behältnisse in der Transportrichtung erfasst, wobei diese weitere Erfassung bevorzugt vor oder während der Bildaufnahme, mit der wenigstens einen Bildaufnahmeeinrichtung erfolgt. Besonders bevorzugt handelt es sich bei dieser weiteren Positionserfassungseinrichtung um eine Lichtschranke bzw. diese weist eine Lichtschranke auf.

Bei einem weiteren bevorzugten Verfahren wird auf Basis der Positionserfassung wenigstens eine physikalische Eigenschaft der Transporteinrichtung bestimmt. Insbesondere handelt es sich hierbei um ein Qualitätsmerkmal der Transporteinrichtung, wie insbesondere aber nicht ausschließlich eine Kettenlängung und/oder eine Verschleißerscheinung, die im Rahmen des Betriebs auftreten kann. In diesem Fall ist es möglich, über längere Zeiträume hinweg entsprechende Bilder der Behältnisse aufzunehmen und diese abzuspeichern. Falls diese erkennen lassen, dass mit der Zeit eine Kettenlängung auftritt, kann dies ein Hinweis für den Benutzer sein, diese Kette zu ersetzen.

Die vorliegende Findung erlaubt daher eine Möglichkeit, eine Geländerposition ohne zusätzliches Messmittel zu bestimmen. Daneben kann auch eine Erkennung für die Kunden beispielsweise hinsichtlich einer Messung der Kettenlängung in der Vorrichtung optimiert werden.

Bevorzugt wird wenigstens ein von der Bildaufnahmeeinrichtung aufgenommenes Bild sowohl dafür verwendet, um wenigstens ein Qualitätsmerkmal der Behältnisse und/oder der Behältnisverschlüsse zu bestimmen als auch dafür, eine Position eines Behältnisses und bevorzugt dieses Behältnisses in der Querrichtung und/oder der Transportrichtung zu bestimmen.

Bei einem weiteren bevorzugten Verfahren werden wenigstens zwei und bevorzugt eine Vielzahl von aufgenommenen Bildern verglichen und in Abhängigkeit von diesem Vergleich wird bevorzugt eine Information ausgegeben.

So ist es beispielsweise möglich, dass aufgrund der aufgenommenen Bilder erkannt wird, dass sich eine Position des Behältnisses zum Aufnahmezeitpunkt verändert. Dies kann als Hinweis gewertet werden, dass sich die Position der Behältnisse mit der Zeit verändert und/oder die Behältnisse mit der Zeit von einer Sollposition "wegdriften". In diesem Fall kann beispielsweise an den Maschinenbediener eine Warninformation ausgegeben werden.

So kann etwa bei einer "weglaufenden" Position der Bediener eine Meldung (beispielsweise an einer Anzeigeeinrichtung) bekommen.

Dabei ist es möglich, dass über die Zeit hinweg mehrere Bilder der gleichen Bildaufnahmeeinrichtung miteinander verglichen werden. Es wäre jedoch auch denkbar, dass die Bilder unterschiedlicher Bildaufnahmeeinrichtungen miteinander verglichen werden.

Weitere Vorteile und Ausführungsformen ergeben sich aus der beigefügten Figur:
Dabei zeigt:

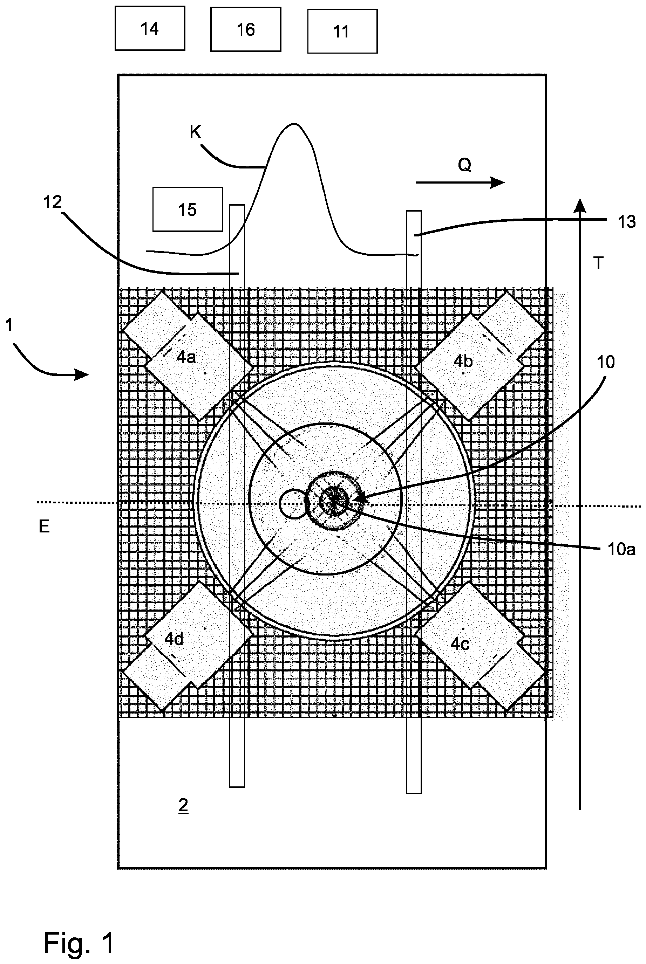

- Fig. 1: eine schematische Darstellung einer erfindungsgemäßen Vorrichtung.

Fig. 1 zeigt eine schematische Darstellung einer erfindungsgemäßen Vorrichtung 1 zum Inspizieren von Behältnissen 10. Diese Behältnisse 10, welche Behältnisverschlüsse 10a aufweisen, werden von einer Transporteinrichtung 2 wie etwa einem Transportband oder einer Transportkette in der Transportrichtung T transportiert. Bei der in Fig. 1 gezeigten Ausgestaltung sind insgesamt vier Bildaufnahmeeinrichtungen 4a, 4b, 4c, 4d vorgesehen, welche hier aus unterschiedlichen Richtungen und bevorzugt schräg von oben oder schräg von unten oder in horizontaler Richtung Bilder des Behältnisses 10, bzw. dessen Behältnisverschlusses 10a aufnehmen.

Die Bezugszeichen 12 und 13 kennzeichnen Führungseinrichtungen, welche die Bewegung der Behältnisse 10 in der Querrichtung Q, die senkrecht zu der Transportrichtung T steht führen und/oder eine Bewegung der Behältnisse in dieser Querrichtung Q begrenzen. Das Bezugszeichen 15 kennzeichnet eine Antriebseinrichtung, mit der eine Position der Führungseinrichtungen 12 bzw. 13 in der Querrichtung verstellt werden kann. Das Bezugszeichen 14 kennzeichnet schematisch eine Positionserfassungseinrichtung, welche aus den von den Bildaufnahmeeinrichtungen 4a - 4d aufgenommenen Bildern auf eine Position des Behältnisses 10, bzw. des Behältnisverschlusses schließt.

Das Bezugszeichen 16 kennzeichnet eine Steuerungseinrichtung, welche die Antriebseinrichtung 15 unter Berücksichtigung der von der Auswerteeinrichtung 14, bzw. der Positionserfassungseinrichtung 14 ermittelten Ergebnisse steuert. Das Bezugszeichen 11 kennzeichnet grobschematisch eine Speicherungseinrichtung, in der eine Vielzahl von aufgenommenen Bildern gespeichert wird. Bevorzugt werden auch diese aufgenommenen Bilder ausgewertet, um auf eine Position der Behältnisse 10 zu schließen.

Bei der in Fig. 1 gezeigten Situation befindet sich das Behältnis mit einer gewissen statistischen Häufigkeit etwas links bezüglich der Soll-Position, was durch die dargestellte Verteilungskurve K dargestellt ist. Daher kann in diesem Fall beispielsweise die Führungseinrichtung 12 etwas weiter in der Querrichtung nach rechts verschoben werden, um diesen Versatz auszugleichen.

Daneben kann auch etwa eine Breite dieser Verteilungskurve K ermittelt werden. Falls diese eine höhere Breite als eine Soll-Breite hat, kann dies ein Indiz dafür sein, dass die Behältnisposition entlang der Transportrichtung bzw. in der Querrichtung starken Schwankungen unterworfen ist. In diesem Falle könnte beispielsweise der seitliche Abstand zwischen den beiden Führungseinrichtungen 12 und 13 verringert werden.

Das Bezugszeichen E kennzeichnet eine Lichtschrankenebene (welche bevorzugt senkrecht zu der Transportrichtung T steht), welche ebenfalls dazu dient, die Bildaufnahme auszulösen. Dabei ist es möglich, dass sich diese Lichtschrankenebene genau bei der Soll-Position der Behältnisse in der Transportrichtung befindet. Es wäre jedoch auch möglich, dass diese Lichtschrankenebene in der Transportrichtung etwas weiter stromaufwärts vorgesehen ist, und mit einem gewissen zeitlichen Versatz, der auch die Transportgeschwindigkeit der Transporteinrichtung 2 berücksichtigt, die Bildaufnahme ausgelöst wird.

Bevorzugt weist die in Fig. 1 gezeigte Vorrichtung auch eine (nicht gezeigte) Beleuchtungseinrichtung auf, welche das Behältnis 10, bzw. den Behältnisverschluss insbesondere von oben beleuchtet. Besonders bevorzugt nehmen daher die Bildaufnahmeeinrichtungen 4a - 4d Bilder der Behältnisse im Auflichtverfahren auf. Dabei ist es möglich, dass diese Beleuchtungseinrichtung gerichtete Strahlung auf die Behältnisverschlüsse richtet, es wäre jedoch auch möglich, dass die Beleuchtungseinrichtung diffuse Strahlung auf die Behältnisverschlüsse richtet. Auch diese (nicht gezeigte) Beleuchtungseinrichtung kann dabei von einer Lichtschrankeneinheit (ebenso wie die Bildaufnahmeeinrichtungen 4a - 4d) ausgelöst werden. Bevorzugt nehmen die Bildaufnahmeeinrichtungen 4a - 4d gleichzeitig Bilder der Behältnisse 10 bzw. der Behältnisverschlüsse auf.

Die von den vier Bildaufnahmeeinrichtungen 4a - 4d aufgenommenen Bilder dienen weiterhin wie oben erwähnt auch dazu, wenigstens ein Qualitätsmerkmal der Verschlüsse (wie etwa Schäden, eine gewisse Ovalität und dergleichen) festzustellen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Inspizieren von Behältnissen (10) mit einer Transporteinrichtung (2), welche die Behältnisse (10) in einer vorgegebenen Transportrichtung transportiert, mit wenigstens einer Führungseinrichtung (12), welche die Behältnisse (10) während ihres Transports in der Transportrichtung führt, wobei bevorzugt eine Position dieser Führungseinrichtung (12) in einer zu der Transportrichtung senkrecht stehenden Richtung (Q) verstellbar ist und mit wenigstens einer Bildaufnahmeeinrichtung (4a, 4b, 4c, 4d), welche dazu geeignet und bestimmt ist, ein ortsaufgelöstes Bild der von der Transporteinrichtung (2) transportierten Behältnisse (10) aufzunehmen, und mit einer Positionserfassungseinrichtung (14), welche eine Position der Behältnisse in der Transportrichtung und/oder der Querrichtung erfasst,
**dadurch gekennzeichnet, dass**
die Positionserfassungseinrichtung (4a, 4b, 4c, 4d, 14) zur Positionserfassung wenigstens ein von der Bildaufnahmeeinrichtung (4a, 4b, 4c, 4d) aufgenommenes Bild auswertet und/oder die wenigstens eine Bildaufnahmeeinrichtung (4a, 4b, 4c, 4d) zumindest einen Bestandteil dieser Positionserfassungseinrichtung ausbildet.

2. Vorrichtung (1) nach Anspruch 1,
**dadurch gekennzeichnet, dass**
die Vorrichtung eine Antriebseinrichtung (15) aufweist, um eine Position der Führungseinrichtung zu verstellen sowie eine Steuerungseinrichtung (16) zum Steuern dieser Antriebseinrichtung (14).

3. Vorrichtung (1) nach Anspruch 2,
**dadurch gekennzeichnet, dass**
die Steuerungseinrichtung (16) die Antriebseinrichtung (14) auf Basis wenigstens eines von der Bildaufnahmeeinrichtung aufgenommenen Bildes und bevorzugt auf Basis einer Vielzahl von der Bildaufnahmeeinrichtung aufgenommenen Bildern steuert.

4. Vorrichtung (1) nach wenigstens einem der vorangegangenen Ansprüche,
**dadurch gekennzeichnet, dass**
die Führungseinrichtung sich wenigstens abschnittsweise entlang der Transportrichtung erstreckt und bevorzugt die Führungseinrichtung ein Führungsgeländer aufweist.

5. Vorrichtung (1) nach wenigstens einem der vorangegangenen Ansprüche,
**dadurch gekennzeichnet, dass**
die Inspektionseinrichtung wenigstens zwei, bevorzugt wenigstens drei und bevorzugt wenigstens vier Bildaufnahmeeinrichtungen aufweist, welche bevorzugt jeweils ein ortsaufgelöstes Bild der Behältnisse aufnehmen.

6. Vorrichtung (1) nach dem vorangegangenen Anspruch,
**dadurch gekennzeichnet, dass**
die Steuerungseinrichtung (16) die Antriebseinrichtung (14) auf Basis wenigstens der von zwei, bevorzugt auf Basis der von wenigstens drei und bevorzugt auf Basis der von vier Bildaufnahmeeinrichtungen aufgenommenen Bilder steuert.

7. Vorrichtung (1) nach Anspruch 5,
**dadurch gekennzeichnet, dass**
die Vorrichtung eine Auswerteeinrichtung aufweist, welche die Bilder von wenigstens zwei, bevorzugt wenigstens drei und bevorzugt von vier Bildaufnahmeeinrichtungen auswertet, um eine Position der Behältnisse festzustellen.

8. Vorrichtung (1) nach wenigstens einem der vorangegangenen Ansprüche,
**dadurch gekennzeichnet, dass**
die Vorrichtung (1) eine weitere Positionserfassungseinrichtung aufweist, welche eine Position der Behältnisse in der Transportrichtung erfasst, wobei diese weitere Positionserfassung bevorzugt in der Transportrichtung der Behältnisse vor oder bei der Bildaufnahmeeinrichtung angeordnet ist und wobei besonders bevorzugt diese weitere Positionserfassungseinrichtung wenigstens eine Lichtschranke aufweist.

9. Verfahren zum Inspizieren von Behältnissen (10) wobei eine Transporteinrichtung (2), die Behältnisse (10) in einer vorgegebenen Transportrichtung transportiert und wenigstens eine Führungseinrichtung (12) die Behältnisse (10) während ihres Transports in der Transportrichtung führt, wobei bevorzugt eine Position dieser Führungseinrichtung (12) in einer zu der Transportrichtung senkrecht stehenden Richtung (Q) verstellbar ist und wenigstens eine Bildaufnahmeeinrichtung (4a, 4b, 4c, 4d), wenigstens ein ortsaufgelöstes Bild der von der Transporteinrichtung (2) transportierten Behältnisse (10) aufnimmt und wobei eine Positionserfassungseinrichtung (14), eine Position der Behältnisse in der Transportrichtung und/oder der Querrichtung (Q) erfasst,
**dadurch gekennzeichnet, dass**
die Positionserfassungseinrichtung (14) zur Positionserfassung wenigstens ein von der Bildaufnahmeeinrichtung aufgenommenes Bild auswertet und/oder die wenigstens eine Bildaufnahmeeinrichtung (4a, 4b, 4c, 4d) zumindest einen Bestandteil dieser Positionserfassungseinrichtung (14) ausbildet.

10. Verfahren nach Anspruch 9,
**dadurch gekennzeichnet, dass**
die Position der Führungseinrichtung unter Berücksichtigung des von der Bildaufnahmeeinrichtung aufgenommenen Bildes verändert wird.

11. Verfahren nach wenigstens einem der vorangegangenen Ansprüche,
**dadurch gekennzeichnet, dass**
wenigstens zwei, bevorzugt wenigstens drei und bevorzugt wenigstens vier Bildaufnahmeeinrichtungen Bilder der Behältnisse aufnehmen.

12. Verfahren nach dem vorangegangenen Anspruch,
**dadurch gekennzeichnet, dass**
die von wenigstens zwei, bevorzugt von wenigstens drei und bevorzugt von wenigstens vier Bildaufnahmeeinrichtungen aufgenommenen Bilder auswertet werden, um die Position der Behältnisse zu bestimmen.

13. Verfahren nach wenigstens einem der vorangegangenen Ansprüche,
**dadurch gekennzeichnet, dass**
eine Vielzahl von unterschiedlichen Behältnissen aufgenommenen Bildern ausgewertet wird, um die Position der Behältnisse zu bestimmen und/oder wenigstens zwei und bevorzugt eine Vielzahl von aufgenommenen Bildern verglichen werden und in Abhängigkeit von diesem Vergleich eine Information ausgegeben wird.

14. Verfahren nach wenigstens einem der vorangegangenen Ansprüche,
**dadurch gekennzeichnet, dass**
mittels einer weiteren Positionserfassungseinrichtung eine Position der Behältnisse in der Transportrichtung erfasst wird, wobei diese weitere Erfassung bevorzugt vor der Bildaufnahme erfolgt.

15. Verfahren nach wenigstens einem der vorangegangenen Ansprüche,
**dadurch gekennzeichnet, dass**
auf Basis der Positionserfassung wenigstens eine physikalische Eigenschaft der Transporteinrichtung (2) bestimmt wird.
